# EUROPEAN PATENT APPLICATION

(11) **EP 2 345 870 A2**
(43) Date of publication of application: **20.07.2011**
(21) Application number: 10252153.1
(22) Date of filing: 17.12.2010
(51) Int. Cl.: G01C 21/16, G01C 21/30

(54) **On-board unit for vehicle telemetry**

(30) Priority: 19.01.2010 GB 1000839
(71) Applicant: Thales Holdings UK Plc, Addlestone, Weybridge, Surrey KT15 2NX (GB)
(72) Inventor: Harris, Philip J., Reading Berkshire RG2 0SB (GB)
(74) Representative: Round, Edward Mark

(57) **Abstract**

An on-board unit for a vehicle, configured to determine the changes in position of the vehicle and thus its route taken comprising: a map database containing constraint information that describes possible vehicle routes; an inertial measurement unit; and a data processor; the data processor being programmed to process the output of the inertial measurement unit, combined with relevant motion constraints from the map database, and from these determine the actual route that has been taken by the vehicle.

## Description

This invention relates to vehicle telemetry applications, and in particular to an on-board unit for determining the route that has been taken by a vehicle.

For telematics applications the OBU (On-Board Unit) is the part of the system that resides in the vehicle. The OBU is responsible for determining the vehicle position, collecting any other parameters of interest and reporting these to a remote computer via some form of communication link. Typically the OBU uses GNSS (Global Navigation Satellite System) satellite navigation for positioning and GPRS (General Packet Radio Service) for the data link.

For most telematics applications the OBU can be considered as being in a relatively benign threat environment, as the OBU is primarily providing information and is not a critical link in a liability- or security-critical chain. However for sensitive applications such as road user charging the OBU is expected to be subject to many different threats. These threats range from physical tampering, electronic attack, to fraudulent use. This invention primarily concerns the mitigation of threats against the positioning subsystem of the OBU aimed at preventing accurate route calculation, and therefore charging, in road user charging applications.

GNSS signals are particularly vulnerable to attack due to their extremely low received power level, and because they lack of any form of authentication. These characteristics make the GNSS subsystem of the OBU vulnerable to jamming, blockage, and spoofing - all of which can prevent the collection of accurate route information. Some of these threats are inherent in the environment: for example blockage and multipath are particularly prevalent in urban areas.

An attack based on jamming or blockage has the effect of denying the GNSS receiver the ability to calculate a position solution, and therefore can break any business model or process which relies on knowledge of the current position or the route taken by the vehicle. Jamming and blockage can be readily detected by either an absence of the received signal in the GNSS receiver or by excessive received power level at the input of the GNSS receiver.

An attack based on spoofing relies on substituting a synthesised replica of the GNSS signal for the genuine GNSS signal. Since the synthesised signal is under the control of the attacker it is possible for the attacker to manipulate the GNSS receiver to generate any desired time or position solution, allowing the attacker to introduce false route or position information into the threatened system. Unlike a jamming or blocking attack it is very difficult to identify a spoofing attack without reference to a second, complementary, positioning system.

Other sensors can be used to aid GNSS and reduce its vulnerability. External odometer inputs from the vehicle, magnetic compasses, and inertial sensors have all been used to provide such assistance to the OBU. Typically these sensors are only used as secondary inputs to the navigation algorithm due to their low data quality, and are primarily intended to support navigation during short periods of signal loss such as is often encountered in urban environments. As a result, in these systems the primary input remains GNSS and the OBU expects GNSS-based positions to be restored after a short period.

The present invention provides, an on-board unit for a vehicle, configured to determine the changes in position of the vehicle and thus its route taken, without the use of any global navigation satellite system, GNSS, comprising: a map database containing constraint information that describes possible vehicle routes; an inertial measurement unit; and a data processor; the data processor being programmed to process the output of the inertial measurement unit, combined with relevant motion constraints from the map database, and from these determine the actual route that has been taken by the vehicle.

Preferably, coarse vehicle position data, for example from the GSM, are taken into account when initialising or re-calibrating vehicle position. Data from the vehicle indicative of the speed of the vehicle may also be used in the data processor to assist in determining vehicle position. Preferably, the data processor is programmed to execute a Strap-down Inertial Navigation System, SINS, algorithm preferably coupled with a navigation filter based on Extended Kalman Filter, EKF, algorithm and preferably also a motion pattern matcher algorithm based on route constraints from the map database and estimates of the vehicle trajectory from the navigation filter algorithm, to output a calculated vehicle route.

The invention also provides a method of determining the route that has been taken by a vehicle, without the use of any global navigation satellite system, GNSS, comprising using an inertial navigation system in the vehicle and a map database in the vehicle to determine the positional and motion constraints applicable to the vehicle and thus the route that has been taken by the vehicle.

In order that the invention may be better understood, a preferred embodiment will now be described, by way of example only, with reference to the accompanying schematic drawings, in which:
Fig. 1 is a flow diagram of the operation of an on-board unit embodying the invention;
   and
Fig. 2 is a block diagram of the components of the on-board unit of Fig. 1.

The most important aspect of this invention is the complete elimination of GNSS in the OBU (currently the de facto positioning solution), and instead rely on a combination of inertial sensors and stored map data. This approach increases security and robustness in the road user charging domain or other liability- or security-critical applications, and minimises the use of any other external sensor inputs.

By eliminating reliance on external positioning subsystems or sensors this invention seeks to reduce or eliminate any interfaces that may allow an attacker to compromise the application. Those interfaces that rely on external systems, GNSS positioning being one such example, are those that are most vulnerable to remote attack where the attacker is external to the vehicle under attack. Interfaces to additional sensors in the vehicle (e.g. odometer) are less vulnerable as they require compromise of the vehicle under attack, however in many applications such as road-user charging, the vehicle itself must be considered as compromised, and therefore it is desirable to eliminate these interfaces as well.

The described invention allows for elimination of all external vulnerable interfaces from the OBU. The only remaining interface is that required for communications which can be suitably protected through conventional communication security measures. Elimination of the GNSS receiver and its antenna allows for reduced manufacturing cost, and also allows much greater freedom in mounting the OBU in the vehicle. For example, the invention facilitates the mounting of the OBU beneath body panels or even embedding in the chassis of the vehicle, improving protection against physical tampering by making access to the OBU more difficult.

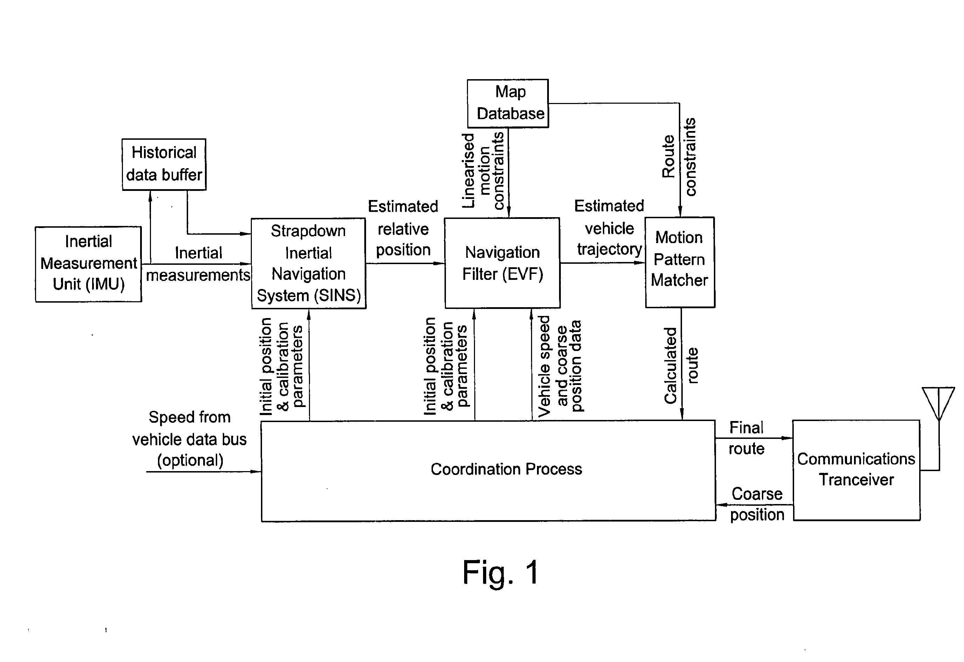

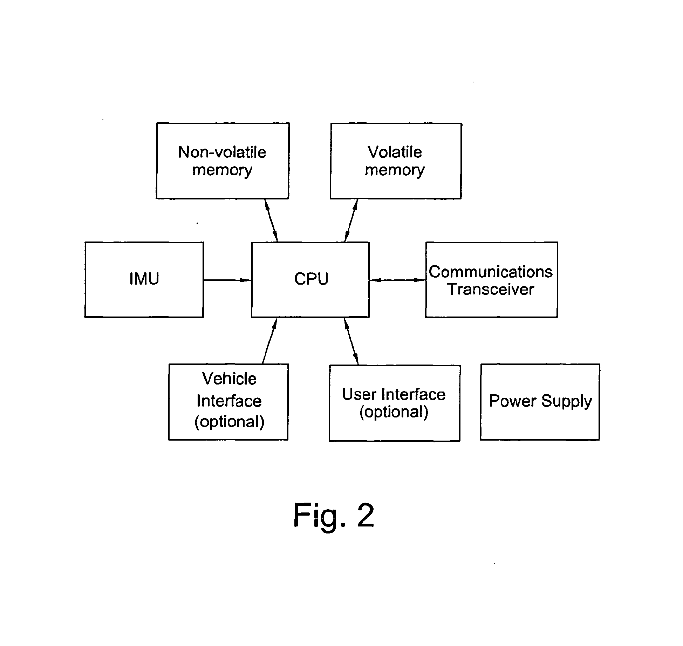

The preferred embodiment is shown in Figure 2, and its operation is shown in Figure 1. It uses inertial sensors in an Internal Measurement Unit, IMU, tightly coupled with an accurate map database, to calculate the route taken by the vehicle to sufficient accuracy. Initialisation of the positioning system is performed through iterative template matching using a Motion Pattern algorithm and the map database, with possible augmentation via coarse location estimation from the communications subsystem (e.g. GSM cell identifier which indicates the known position of the GSM transmitter).

The OBU consists of the following major subsystems: a mobile telemetry device fitted to the vehicle and comprising of an Inertial Measurement Unit (IMU), a processing unit, a data storage unit, a communications transceiver unit for reporting (e.g. a GPRS modem), and a power supply. Additional subsystems may be required for particular applications but are non-essential. The processing unit is a CPU with volatile and non-volatile memory, the latter for the map database.

The IMU may be based on Micro-machined Electro-Mechanical Sensors (MEMS) or similar technology. The IMU may be implemented as a full six degree-of-freedom design comprising of three orthogonal linear accelerometers and three orthogonal rate gyroscopes, or may be implemented as a reduced subset of these sensors. The minimum configuration is two orthogonal linear accelerometers, both lying in the horizontal plane, and a single rate gyroscope sensing rotation in that horizontal plane. MEMS inertial sensors are small and low-power, allowing easy installation in a sealed tamper-proof case. They are also very difficult to spoof by external means.

The IMU measures the linear acceleration and rotational rate of the vehicle and provides this data to a "Strap-down Inertial Navigation System" (SINS) algorithm executed in the CPU. The SINS algorithm integrates the data from the IMU to produce a best-estimate of the motion of the vehicle relative to an initialisation point.

Low cost inertial sensors are notorious for noise and drift - typically they can only be relied on to accurately propagate a position solution within the SINS for a few seconds. In traditional systems this requires periodic re-initialisation or compensation of the SINS via an absolute positioning system such as GNSS.

The relatively poor performance of a low cost IMU can justify the elimination of some of the sensor elements in the IMU if the noise of the sensor element is significantly greater than the accelerations to be measured. This can allow a lower cost reduced sensor configuration for the IMU.

Despite the poor intrinsic positioning performance of the low cost IMU-based SINS, in many liability-critical applications such as road user charging the accuracy of the current position solution is not the critical metric for system performance, and instead accurate reconstruction of the actual route taken against reference road segments in a map database is considered as the key metric. Latency is also unimportant for road user charging - the charging algorithm can operate both forwards and backwards in time to refine the solution as required. These two considerations are exploited in this invention.

Firstly, the navigation filter algorithm can incorporate linearised constraints from a reference road map database to constrain the motion output by the SINS algorithm to a trajectory on the map over moderate time-scales; Secondly, the dynamic motion (e.g. rapid rotation in the horizontal plane) of the vehicle can be correlated against (e.g. corner) features in a reference road map database to identify location over longer times-scales; Thirdly, if the calculated current position exceeds a minimum level of confidence then all previous position solutions can be re-computed by executing the first two methods in a reversed-time sense from the current position.

The map database used to support these approaches is a compressed vector representation of the real road network on which the vehicle is used. In this representation vector segments represent physical roads and the nodes where segments meet represent physical road intersections. The data describing nodes includes the geographical location of the intersection, and any turning restrictions between the road segments (e.g. "no left turn").

Such a representation can be derived from the mathematical transformation of map data products from several commercial map suppliers using commercial or customised geospatial information software tools. The resulting data is then pre-loaded onto the device during manufacture. Periodic updates or "patches" can be supplied to deployed devices via the communications interface to ensure that the map database always correctly represents the actual road network. The map database may be represented in any geospatial coordinate frame that is convenient for its use in constraining the navigation filter solution or feature matching.

In one possible implementation, the propagation of the SINS position output is constrained by the navigation filter by simply using the estimated velocity of the vehicle and the heading of the current road segment obtained from the map database, and the position is then propagated along the resulting vector in a least-squares fashion in response to the outputs of the SINS algorithm. The velocity estimate is periodically re-initialised by measuring the time taken to travel the map segment with the start and stop points delimited by significant near-instantaneous heading changes, which are easily detected even in the presence of significant sensor noise.

The current segment in the map database is continuously re-evaluated from the estimated trajectory of the vehicle by pattern matching, using a Motion Pattern Matcher algorithm executed in the CPU, the vehicle dynamics against those map database segments within a configurable search radius of the current segment. In the preferred implementation the size of the searched section is adjusted according to the estimated confidence in the current position.

In inertial sensors the measurement of angles requires a single mathematical integration process (turn rate to angle) whereas distances require two integration processes (acceleration to velocity to distance). This results in changes in heading being significantly less affected by noise processes in the IMU. The relatively high frequency of abrupt heading changes encountered in urban environments provides many identifiable features for the matching process, however by ignoring the length of each segment, the technique also works well over the long segment lengths encountered in motorway or rural road environments.

The pattern matching process is based on a particle filter approach where a collection of candidate positions (or "particles") is randomly distributed throughout the map section being searched. The particles are also initialised with a random heading to simultaneously resolve the initial vehicle heading uncertainty. By incrementally propagating the position of these particles through the map according to recorded vehicle heading changes, and by eliminating those particles whose path conflicts with the constraints imposed by the map segments, it is possible to arrive at a small collection of feasible current segments. The process of propagation and elimination is continued until only a single feasible map segment remains. This segment is then considered as the current segment.

If it is not possible to uniquely identify the current road segment then the current calculated route is compared against candidate routes calculated by running the navigation filter algorithm "backwards" over the recorded SINS data from each candidate current road segment. This is possible since the navigation filter algorithm is a linear mathematical filtering process and the noise processes in the IMU have the same characteristics in both the conventional forward time and the reversed time ("backwards") directions. The candidate route that most closely matches the current calculated route on the basis of matching segment identifiers is then used to select the current segment.

Despite the approaches described above it is still possible that some periodic absolute position data may be required both to simplify system initialisation and to correct any long-term uncorrected error. The communications subsystem can be used to provide infrequent coarse positioning data of sufficient quality to perform this role.

The recent E-911 directive requires that mobile network operators can provide 300 metre accuracy for 95% of calls without any assistance from the mobile device itself. This level of accuracy combined with the particle filter approach described above is sufficient for system initialisation and periodic re-calibration. GSM- or CDMA-based positioning has a major advantage over GNSS as its signals are robust enough to easily penetrate indoors and through the gaps in any ad-hoc shielding placed over the receiver.

This approach does add a dependence on an external positioning system, however since the necessary protocols are embedded in the control plane of the (supposedly secure) communications network then any attack which can defeat the positioning subsystem of the telemetry device has already defeated the communications subsystem and compromised the overall system.

Depending on the level of security required by the application, and the method of installation in the vehicle, it is also be possible to provide odometer data from the vehicle's OBD-II or CAN diagnostic bus. This information is valuable as it can provide additional compensation to the SINS algorithm as to the speed of the vehicle and the actual distance travelled along the ground. However this interface is potentially vulnerable to attack and is also known to be relatively inaccurate (typical accuracy is around 4%). However, if available it is useful for bias correction of the accelerometers and for accurately identifying when the vehicle is stationary.

The preferred implementation consists of an IMU sensor assembly and a computation unit consisting of a Central Processing Unit (CPU), both volatile and non-volatile data storage, and a power supply that provides power to the system either from a built-in battery or from the vehicle itself. Additional optional subsystems include a communications link capable of providing coarse positioning information, a connection to the vehicle's built-in diagnostics bus, and a user interface.

The IMU may either be configured for full six-axis operation or may be a reduced configuration for cost reduction. The IMU provides measured linear acceleration and rotational terms to the CPU at a rate sufficient to allow reconstruction of the vehicle dynamics. For many vehicular applications a rate of 200 Hz is often sufficient. A finite duration of historical IMU data is stored in volatile data store to allow buffering or replay of the data as required.

The CPU executes the SINS, navigation filter, particle filter, and positioning algorithms as a software program. The CPU may also execute any software required by a particular business model or application. The software is stored in the non-volatile data store.

The implementation of the SINS algorithm transforms the IMU data into an estimate of the current dynamic state (position, velocity, and attitude) of the vehicle by application of any conventional SINS formulation. The output of the SINS is relative to an arbitrary initial state. This relative state is used to propagate the individual particles in the particle filter. The particle filter uses road network map data contained in either the volatile or non-volatile data stores as the constraints against which to propagate the particles. Both the SINS and particle filter are initialised based on an initial position and position accuracy estimate from the positioning algorithm. In the case of the particle filter the initial position and uncertainty are used to select the section of the map data store that needs to be accessed for constraint information.

The initial state can either be the last known-good position and velocity information, or may be provided by the communications network infrastructure (e.g. either by direct ranging or access point identifier in the case of WiFi, GSM, or CDMA).

The optional connection to the vehicle diagnostics bus (e.g. CAN or OBD-II) can be used to provide velocity aiding data to the SINS to constrain its state. The diagnostics bus can also be used to determine when the vehicle is stationary, allowing periodic compensation of bias and drift in the IMU.

The positioning algorithm uses the output of the particle filter to determine the single road segment from the map database which has the highest confidence. This segment is then declared as the current road segment. In this implementation confidence may be measured simply as the number of particles on any candidate segment. If a single segment can be determined with a sufficiently high level of confidence then the positioning algorithm may re-initialise the SINS, navigation filter, and particle filter accordingly.

If the level of confidence in the current segment is high enough, then the positioning algorithm also co-ordinates the reverse-time re-processing of the historical SINS data through the navigation filter algorithm to check and refine the calculated route.

As the vehicle moves through the road network new particles are continuously added to the particle filter according to the currently determined position and position uncertainty. This prevents the particle filter becoming devoid of particles due to error processes at the output of the SINS.

The sequence of road segments generated by the positioning algorithm provides the record of the path taken by the vehicle. This sequence can either be used within the OBU as part of a specific application, or may be transmitted over the communications network for use by a remote system. Alternatively the current position (e.g. road name) can be presented to the vehicle operator via the user interface.

## Claims

1. An on-board unit for a vehicle, configured to determine the changes in position of the vehicle and thus its route taken without the use of any global navigation satellite system, GNSS, comprising: a map database containing constraint information that describes possible vehicle routes; an inertial measurement unit; and a data processor; the data processor being programmed to process the output of the inertial measurement unit, combined with relevant motion constraints from the map database, and from these determine the actual route that has been taken by the vehicle.

2. An on-board unit according to claim 1, comprising a wireless transmitter configured to transmit an output derived from the data processor and representative of the route taken.

3. An on-board unit according to claim 1 or claim 2, comprising a data storage unit configured to store an output derived from the data processor and representative of the route taken by the vehicle for later retrieval.

4. An on-board unit according to any preceding claim, configured to receive coarse vehicle position data, and in which the data processor is configured to take the received coarse vehicle position data into account when initialising or re-calibrating the vehicle position.

5. An on-board unit according to claim 4, configured to receive GSM communications indicative of the coarse position of the on-board unit relative to known GSM transmitter locations.

6. An on-board unit according to claim 4, configured to receive WiFi communications indicative of the coarse position of the on-board unit relative to known WiFi transmitter locations.

7. An on-board unit according to any preceding claim, in which the data processor is configured to receive data from the vehicle indicative of the speed of the vehicle.

8. An on-board unit according to any preceding claim, in which the data processor is programmed to execute a Strap-down Inertial Navigation System, SINS, algorithm based on inertial measurements from the inertial measurement unit, and initial position and calibration parameters received by the data processor, to estimate the motion of the vehicle.

9. An on-board unit according to claim 8, in which the data processor is programmed to execute a navigation filter based on an Extended Kalman Filter, EKF, algorithm using the estimated relative vehicle motion from the SINS algorithm, linearised motion constraints from the map database, and initial position parameters, to output an improved estimate of the trajectory of the vehicle.

10. An on-board unit according to claim 9, in which the navigation filter is configured to incorporate coarse vehicle position and motion constraints obtained by the data processor.

11. An on-board unit according to claim 9, in which the navigation filter is configured to incorporate speed data obtained from the vehicle.

12. An on-board unit according to claim 9, 10 or 11, in which the data processor is programmed to execute a motion pattern matcher algorithm based on route constraints from the map database and estimates of the vehicle trajectory from the navigation filter, to output a calculated vehicle route.

13. A method of determining the route that has been taken by a vehicle, without the use of any global navigation satellite system, GNSS, comprising using an inertial navigation system in the vehicle and a map database in the vehicle to determine the positional and motion constraints applicable to the vehicle and thus the route that has been taken by the vehicle.

14. A method according to claim 13, comprising receiving coarse vehicle position data and using them to initialise or re-calibrate the vehicle position.

15. A method according to claim 14, comprising receiving wireless communications indicative of the coarse position of the vehicle relative to known transmitter locations.

16. A method according to any of claims 13 to 15, comprising receiving data from the vehicle indicative of the speed of the vehicle and using it to initialise or re-calibrate the vehicle position.

17. A method according to any of claims 13 to 16, comprising executing a Strap-down Inertial Navigation System, SINS, algorithm and navigation filter algorithm based on measurements from the inertial measurement unit, linearised motion constraints from the map database, and initial position and calibration parameters received by the data processor, to output the estimated vehicle motion.

18. A method according to claim 17, comprising executing a motion pattern matcher algorithm based on route constraints from the map database and estimates of the vehicle trajectory from the navigation filter algorithm, to output a calculated vehicle route.
